# EUROPEAN PATENT APPLICATION

(11) **EP 4 604 315 A1**
(43) Date of publication of application: **20.08.2025**
(21) Application number: 23879072.9
(22) Date of filing: 16.10.2023
(51) Int. Cl.: H01M 50/691, H01M 50/30

(54) **BATTERY AND ELECTRIC DEVICE**

(30) Priority: 18.10.2022 CN 202222745178 U
(71) Applicant: Contemporary Amperex Technology (Hong Kong) Limited, Central (HK)
(72) Inventor: XU, Chenyi, Ningde, Fujian 352100 (CN); TANG, Yu, Ningde, Fujian 352100 (CN); LI, Xing, Ningde, Fujian 352100 (CN); ZHANG, Chenchen, Ningde, Fujian 352100 (CN); HUANG, Xiaoteng, Ningde, Fujian 352100 (CN)
(74) Representative: Ziebig Hengelhaupt Intellectual Property Attorneys Patentanwaltskanzlei PartGmbB
(86) International application number: PCT/CN2023/124782
(87) International publication number: WO 2024/083083

(57) **Abstract**

This application discloses a battery and an electrical device. The battery includes: a box, where an accommodation cavity is disposed in the box; a battery cell, disposed in the accommodation cavity, where the battery cell is provided with a pressure relief mechanism; and a support beam, where the support beam is disposed in the accommodation cavity, the support beam is provided with a liquid discharge cavity and a liquid inlet, and the liquid inlet communicates to the liquid discharge cavity so that a liquid in the battery cell discharged into the accommodation cavity through the pressure relief mechanism is able to be discharged from the liquid inlet into the liquid discharge cavity.

## Description

### CROSS-REFERENCE TO RELATED APPLICATIONS

This application is based on and claims priority to Chinese Patent Application No. 202222745178.1, filed on October 18, 2022, which is incorporated herein by reference in its entirety.

### TECHNICAL FIELD

This application relates to the technical field of batteries, and in particular, to a battery and an electrical device.

### BACKGROUND

Energy conservation and emission reduction are key to sustainable development of the automobile industry. Electric vehicles have become an important part of the sustainable development of the automobile industry by virtue of energy saving and environmental friendliness. Battery technology is crucial to development of electric vehicles.

The battery includes a pressure relief mechanism. However, the pressure relief mechanism is a fragile position in the battery. To be specific, an electrolyte solution in the battery is prone to leak at the pressure relief mechanism or a weld joint on a housing of the battery. If the leaked electrolyte solution is not discharged in time, the battery is prone to insulation failure. Therefore, how to discharge the leaked electrolyte solution is a problem to be solved.

### SUMMARY

In view of the above problem, this application provides a battery and an electrical device to solve the problem of discharging the leaked electrolyte solution, so as to avoid insulation failure of the battery.

According to a first aspect, an embodiment of this application provides a battery. The battery includes: a box, where an accommodation cavity is disposed in the box; a battery cell, disposed in the accommodation cavity, where the battery cell is provided with a pressure relief mechanism; and a support beam, where the support beam is disposed in the accommodation cavity, the support beam is provided with a liquid discharge cavity and a liquid inlet, and the liquid inlet communicates to the liquid discharge cavity so that a liquid in the battery cell discharged into the accommodation cavity through the pressure relief mechanism is able to be discharged from the liquid inlet into the liquid discharge cavity.

In the technical solution according to this embodiment of this application, a support beam is disposed in the accommodation cavity, and a liquid discharge cavity and a liquid inlet are disposed on the support beam. With such a design, the liquid discharged from the pressure relief mechanism of the battery cell into the accommodation cavity is enabled to enter the liquid discharge cavity through the liquid inlet. In this way, the liquid discharged by the battery cell into the accommodation cavity can be discharged in time, thereby avoiding insulation failure of the battery caused by accumulation of the liquid in the accommodation cavity.

In some embodiments, the liquid inlet is lower than the pressure relief mechanism along a height direction of the support beam.

By making the height of the liquid inlet lower than the height of the pressure relief mechanism, the liquid can be made to enter the liquid discharge cavity through the liquid inlet when the height of the liquid in the accommodation cavity does not reach the pressure relief mechanism, thereby improving the liquid discharge efficiency, avoiding electrical connection and conduction between the battery cells caused by an excessively high liquid level accumulated in the accommodation cavity, and in turn, more effectively avoiding insulation failure of the battery.

In some embodiments, the liquid discharge cavity is provided with a first liquid discharge port. An inner bottom wall of the accommodation cavity is provided with a second liquid discharge port. The second liquid discharge port communicates to the first liquid discharge port.

By disposing the first liquid discharge port and the second liquid discharge port that communicate with each other, the liquid entering the liquid discharge cavity can be discharged through the first liquid discharge port and the second liquid discharge port sequentially, thereby facilitating the discharge of the liquid in the liquid discharge cavity, and preventing the liquid from accumulating in the liquid discharge cavity and from leaking back into the accommodation cavity.

In some embodiments, along a height direction of the support beam, the first liquid discharge port and the second liquid discharge port face each other directly. Such a design makes the distance between the first liquid discharge port and the second liquid discharge port smaller, and makes it convenient for the liquid to flow directly to the second liquid discharge port after being discharged from the first liquid discharge port, and to be discharged from the second liquid discharge port, thereby improving the discharge efficiency of the liquid.

In some embodiments, the box further includes a second bottom wall. The second bottom wall is located below the inner bottom wall. A liquid collection cavity is defined between the second bottom wall and the inner bottom wall. The second liquid discharge port communicates to the liquid collection cavity.

By positioning the second bottom wall below the inner bottom wall, a liquid collection cavity is defined between the second bottom wall and the inner bottom wall, and the second liquid discharge port communicates to the liquid collection cavity. In this way, the liquid discharged from the second liquid discharge port can flow into the liquid collection cavity, so that the liquid collection cavity can temporarily store and collect the liquid discharged from the second liquid discharge port, thereby making it convenient to collect the liquid, alleviating the liquid pressure in the liquid discharge cavity, reducing the liquid height in the liquid discharge cavity, and preventing the liquid in the liquid discharge cavity from accumulating and leaking back into the box.

In some embodiments, the liquid collection cavity is provided with a third liquid discharge port. The third liquid discharge port is configured to discharge a liquid. Such a design enables the liquid in the liquid collection cavity to be discharged through the third liquid discharge port, thereby facilitating discharge of the liquid in the liquid collection cavity.

In some embodiments, the battery further includes a blocking piece. The blocking piece is movably and/or detachably disposed on the second bottom wall to open or close the third liquid discharge port.

With the blocking piece disposed, the third liquid discharge port can be selectively opened or closed. Therefore, when the third liquid discharge port needs to be closed, the third liquid discharge port can be closed through the blocking piece, so as to ensure the airtightness of the liquid collection cavity and avoid leakage of the liquid in the liquid collection cavity. When the third liquid discharge port needs to be opened, the third liquid discharge port can be opened through the blocking piece, so as to discharge the liquid in the liquid collection cavity.

In some embodiments, the blocking piece is configured to open the third liquid discharge port when a mass of the liquid in the liquid collection cavity reaches a preset threshold, and close the third liquid discharge port when the mass of the liquid is lower than the preset threshold.

Such a design uses the mass of the liquid in the liquid collection cavity as a condition for determining whether the blocking piece is to open or close the third liquid discharge port. To be specific, when the liquid collection cavity collects the liquid and the mass of the liquid in the liquid collection cavity reaches a preset threshold, the blocking piece automatically opens the third liquid discharge port, so as to discharge the liquid out of the battery pack. After the liquid is discharged, when the mass of the liquid in the liquid collection cavity drops below the preset threshold, the blocking piece automatically closes the third liquid discharge port, thereby not impairing the airtightness of the liquid collection cavity.

In some embodiments, the blocking piece includes a movable piece and an elastic reset piece. The elastic reset piece is connected to the movable piece and the second bottom wall respectively so that the movable piece is able to switch between a state of opening the third liquid discharge port and a state of closing the third liquid discharge port.

By configuring the blocking piece as an elastic reset piece and a movable piece, when it is necessary to discharge the liquid in the liquid collection cavity, the elastic reset piece drives the movable piece to move to open the third liquid discharge port. When it is not necessary to discharge the liquid in the liquid collection cavity, the movable piece can be automatically reset under the elastic force of the elastic reset piece to close the third liquid discharge port, thereby not impairing the airtightness of the liquid collection cavity.

In some embodiments, a part of the blocking piece forms an elastic piece. The elastic piece is configured to close the third liquid discharge port when attached to the second bottom wall. The elastic piece is further configured to open the third liquid discharge port when detached from the second bottom wall.

By forming a part of the blocking piece as an elastic piece, when it is necessary to discharge the liquid in the liquid collection cavity, the elastic piece can be detached from the second bottom wall to open the third liquid discharge port. When it is not necessary to discharge the liquid in the liquid collection cavity, the elastic piece can be automatically reset under the elastic force of the elastic piece and attached to the second bottom wall to close the third liquid discharge port, thereby not impairing the airtightness of the liquid collection cavity.

In some embodiments, a liquid absorption piece is disposed in the liquid collection cavity.

With the liquid absorption piece disposed, the liquid absorption piece in the liquid collection cavity can play adsorptive role for the liquid in the liquid discharge cavity. In this way, the liquid in the liquid discharge cavity can be discharged into the liquid collection cavity more quickly, and it is convenient to discharge the liquid in the liquid discharge cavity in time, thereby improving the discharge efficiency of the liquid in the liquid discharge cavity.

In some embodiments, the liquid absorption piece is replaceably disposed in the liquid collection cavity. Such a design facilitates timely replacement or maintenance of the liquid absorption piece. By replacing the liquid absorption piece, it is ensured that the liquid absorption piece in the liquid collection cavity achieves the best adsorption effect.

In some embodiments, in a thickness direction of the support beam, the liquid inlet is located on a sidewall of the liquid discharge cavity. The liquid inlets are arranged at intervals on the inner bottom wall of the accommodation cavity. Such a design enables the liquid inlet to be located on the sidewall of the support beam in the thickness direction of the support beam. The liquid inlet is spaced apart from the inner bottom wall of the accommodation cavity, so as to reduce the difficulty of processing the liquid inlet.

In some embodiments, a thermal management channel is disposed in the support beam. The thermal management channel is disposed independently from the liquid discharge cavity. A heat exchange fluid is disposed in the thermal management channel. At least a part of the battery cell is thermally connected to the support beam.

By disposing a thermal management channel in the support beam, it is convenient for the heat exchange fluid to flow along the thermal management channel. At least a part of the battery cell is thermally connected to the support beam, so that the battery cell can exchange heat with the support beam, thereby making it convenient to control the temperature of the battery through the thermal management channel, and ensuring that the battery can operate at appropriate temperature.

In some embodiments, the battery cells thermally connected to the support beam are distributed on at least one side of the support beam along a thickness direction. This increases the heat exchange area between the battery cells and the support beam, and improves the heat exchange efficiency between the support beam and the battery cells.

In some embodiments, a plurality of rows of stacked battery cells are disposed on the same side of the support beam. Such a design makes the arrangement of the battery cells more compact, saves the mounting space, and makes it convenient to thermally connect more battery cells to the same side of the support beam, thereby improving the heat exchange efficiency between the support beam and the battery cells.

In some embodiments, the pressure relief mechanism is disposed on a sidewall of the battery cell, the sidewall being oriented toward the support beam. By disposing the pressure relief mechanism on the sidewall of the battery cell, with the sidewall oriented toward the support beam, the pressure relief mechanism is closer to the liquid inlet. In this way, the liquid can be brought out more easily during pressure relief of the battery cell, the battery cell can be relieved of pressure more quickly, and the liquid released from the battery cell can more easily enter the liquid discharge cavity through the liquid inlet.

In some embodiments, the battery cell includes a dimension H1 along a first direction, a dimension H2 along a second direction, and a dimension H3 along a third direction. The battery cell satisfies: H1 ≥ H2 > H3. The first direction, the second direction, and the third direction are perpendicular to each other. The third direction is parallel to a height direction of the support beam.

Such a design allows the battery cells to lie flat in the box, makes the arrangement of the battery cells more compact, saves the mounting space, and makes the pressure relief mechanism of the battery cell positioned not in a high position. After the battery cell is relieved of pressure, the liquid can flow into the accommodation cavity, thereby reducing the splashing of the liquid during pressure relief of the battery cell.

In some embodiments, the battery cell includes a center plane perpendicular to the third direction. At least a part of the pressure relief mechanism is located on one side of the center plane, the side being close to an inner bottom wall of the accommodation cavity. Such a design enables at least a part of the pressure relief mechanism in the third direction of the battery cell to be located in a lower region of the battery cell. The design can reduce the height of the pressure relief mechanism, thereby preventing the pressure relief mechanism from being excessively high, and in turn, avoiding electrical connection and conduction between the battery cells during pressure relief of the battery cells, and more effectively avoiding insulation failure of the battery.

In some embodiments, the pressure relief mechanism is disposed on a surface of the battery cell, the surface being oriented toward an inner bottom wall of the accommodation cavity. Such a design enables the liquid in the battery cell to be discharged more quickly during pressure relief of the battery cell. The discharged liquid can enter the liquid discharge cavity in time from the liquid inlet, thereby preventing the pressure relief mechanism from being excessively high, and in turn, avoiding electrical connection and conduction between the battery cells during pressure relief of the battery cells, and more effectively avoiding insulation failure of the battery.

According to a second aspect, an embodiment of this application further provides an electrical device. The electrical device includes the battery disclosed above. The battery is configured to provide electrical energy.

Additional aspects and advantages of this application will be partly given in the following description, and a part thereof will become evident in the following description or will be learned in the practice of this application.

### BRIEF DESCRIPTION OF DRAWINGS

The above and/or additional aspects and advantages of this application will become evident and easily comprehensible through the description of some embodiments with reference with the drawings outlined below:
FIG. 1 is a schematic structural diagram of a vehicle according to some embodiments of this application;
FIG. 2 is an exploded view of a battery according to some embodiments of this application;
FIG. 3 is a schematic diagram of a battery according to some embodiments of this application;
FIG. 4 is a schematic diagram of the battery shown in FIG. 3 with some battery cells hidden;
FIG. 5 is a close-up view of a part A shown in FIG. 4;
FIG. 6 is a front view of the battery shown in FIG. 3;
FIG. 7 is a bottom view of the battery shown in FIG. 3 with an inner bottom wall hidden;
FIG. 8 is a close-up view of a part B shown in FIG. 7;
FIG. 9 is a bottom view of the battery shown in FIG. 3;
FIG. 10 is a close-up view of a part C shown in FIG. 9;
FIG. 11 is a cross-sectional view at a third liquid discharge port after a second bottom wall and an inner bottom wall are assembled according to some embodiments of this application;
FIG. 12 is a cross-sectional view after a second bottom wall and an inner bottom wall are assembled according to some embodiments of this application; and
FIG. 13 is a cross-sectional view after a second bottom wall and an inner bottom wall are assembled according to some other embodiments of this application.

### List of reference numerals:

vehicle 1000;
battery 100, controller 200, motor 300;
box 10, first part 11, second part 12;
accommodating cavity 13, inner bottom wall 131, second liquid discharge port 132;
second bottom wall 14, third liquid discharge port 141;
liquid collection cavity 15;
battery cell 20;
support beam 30, liquid discharge cavity 31, liquid inlet 32, connecting bolt 33, first liquid discharge port 34;
blocking piece 40, liquid absorption piece 50;
height direction of support beam F1, thickness direction of support beam F2;
first direction of battery cell F3, second direction of battery cell F4, third direction of battery cell F5.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the expansion of the application fields of the power batteries.

The inventor hereof has noticed that a battery cell 20 includes a pressure relief mechanism, but the pressure relief mechanism is a fragile position of the battery cell 20. When the fragile position is in contact with an electrolyte solution for a long time, the structure at this position is prone to creep, thereby being prone to cause structural failure and posing a high risk of leakage. For example, the battery cell 20 is arranged in flat lying manner, so that the pressure relief mechanism is not in a high position, and the pressure relief mechanism is in contact with the electrolyte solution for a long time. In this case, the risk of leakage at the pressure relief mechanism increases, and the electrolyte solution in the battery cell 20 is prone to leak at the pressure relief mechanism. Alternatively, if the temperature of the battery 100 is excessively high or the pressure in the battery 100 is high, leakage of the battery 100 may also be caused at the pressure relief mechanism or another structure. In such cases, if the leaked electrolyte solution is not discharged in time, the electrolyte solution is prone to accumulate and make the battery cell 20 electrically connected and conductive inside, thereby causing the insulation failure and an internal short circuit of the battery 100, and in turn, probably resulting in accidents such as fire and explosion of the battery 100. Therefore, how to discharge the leaked electrolyte solution is a problem to be solved.

In order to alleviate the liquid discharge problem after the electrolyte solution is leaked, the applicant hereof finds through research that a liquid discharge structure may be disposed in the accommodating cavity 13 to discharge the electrolyte solution after pressure relief. In this way, the liquid discharged by the battery cell 20 from the pressure relief mechanism into the accommodation cavity 13 can be discharged in time, thereby avoiding insulation failure of the battery 100 caused by the accumulation of liquid in the accommodation cavity 13.

In view of the above situation, in order to solve the liquid discharge problem after the electrolyte solution is leaked, the inventor hereof has conducted in-depth research and designed a battery 100. A support beam 30 is disposed in an accommodation cavity 13, and a liquid discharge cavity 31 and a liquid inlet 32 are disposed on the support beam 30. Such a design enables the liquid to enter the liquid discharge cavity 31 through the liquid inlet 32, where the liquid is discharged from the pressure relief mechanism of the battery cell 20 into the accommodation cavity 13. In this way, the liquid discharged by the battery cell 20 into the accommodation cavity 13 can be discharged in time, thereby avoiding insulation failure of the battery 100 caused by accumulation of the liquid in the accommodation cavity 13.

In such a battery 100, because the support beam 30 is disposed in the accommodation cavity 13 of the box 10, the support beam 30 can fully utilize the mounting space in the accommodation cavity 13, thereby improving the utilization rate of the mounting space, without a need to dispose a liquid discharge structure on the outside of the box 10 for liquid discharge. This design makes it convenient to reduce the overall structural size of the battery 100 and implement the miniaturization design of the battery 100.

With the battery 100 being in service for a period, the battery cell 20 in the box 10 may leak at the pressure relief mechanism, that is, the liquid in the battery cell 20 may be released into the accommodating cavity 13. In this case, the liquid enters the accommodation cavity 13 and then enters the liquid discharge cavity 31 through the liquid inlet 32. This reduces accumulation of liquid in the accommodation cavity 13, where the accumulation of liquid may result in electrical connection and conduction of the battery cell 20 and cause insulation failure of the battery 100.

The battery cell 20 disclosed in an embodiment of this application is applicable to an electrical device that uses a battery 100 as a power supply and is applicable to various energy storage systems that use a battery 100 as an energy storage unit. The electrical devices may be, but are not limited to, a mobile phone, a tablet, a notebook computer, an electric toy, an electric tool, an electric power cart, an electric vehicle, a ship, a spacecraft, or the like. The electric toy may include stationary or mobile electric toys, such as game console, electric car toy, electric ship toy, electric airplane toy, and the like. The spacecraft may include airplane, rocket, space shuttle, spaceship, and the like.

For ease of description in the following embodiments, a vehicle 1000 is used as an example of the electrical device according to an embodiment of this application.

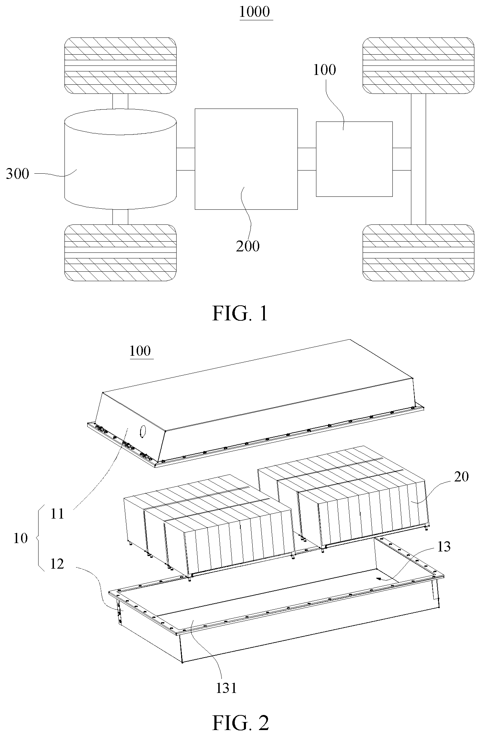

Referring to FIG. 1, which is a schematic structural diagram of a vehicle 1000 according to some embodiments of this application, the vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

Referring to FIG. 2, which is an exploded view of a battery 100 according to some embodiments of this application, the battery 100 includes a box 10 and a battery cell 20. The battery cell 20 is accommodated in the box 10. The box 10 is configured to provide an accommodation space for the battery cell 20. The box 10 may be in various structures. In some embodiments, the box 10 may include a first part 11 and a second part 12. The first part 11 and the second part 12 fit and cover each other. The first part 11 and the second part 12 together define an accommodation space configured to accommodate the battery cell 20.

The second part 12 may be a hollow structure opened at one end. The first part 11 may be a plate-like structure. The first part 11 fits the opening of the second part 12 so that the first part 11 and the second part 12 together define the accommodation space. Alternatively, both the first part 11 and the second part 12 may be hollow structures opened at one side. The opening of the first part 11 fits the opening of the second part 12. Definitely, the box 10 formed by the first part 11 and the second part 12 may be in various shapes, such as a cylinder or a cuboid.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, to make up a battery 100, the plurality of battery cells 20 may be connected in series, parallel, or series-and-parallel pattern to form a battery 100 module first, and then a plurality of battery 100 modules are connected in series, parallel, or series-and-parallel pattern to form a whole and accommodated in the box 10. The battery 100 may further include other structures. For example, the battery 100 may further include a busbar component. The busbar component is configured to implement electrical connection between the plurality of battery cells 20.

Each battery cell 20 may be, but is not limited to, a secondary battery or primary battery; or, may be a lithium-sulfur battery, a sodium-ion battery, or a magnesium-ion battery. The battery cell 20 may be in a shape such as a cylinder, a flat body, a cuboid, or other shapes.

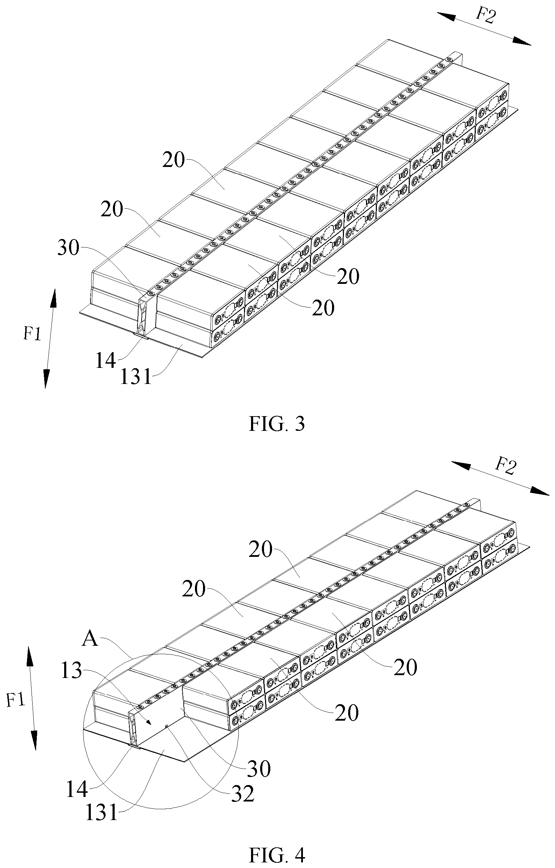

According to some embodiments of this application, referring to FIG. 3, FIG. 3 is a schematic diagram of a partial structure of a battery 100 (a battery cell 20, an inner bottom wall 131, a support beam 30, and a second bottom wall 14) according to some embodiments of this application. The battery cell 20 means a minimum unit that constitutes a battery 100. The battery cell 20 is filled with an electrolyte solution. A pressure relief mechanism is disposed on an outer wall of the battery cell 20.

Referring to FIG. 2, an accommodation cavity 13 is disposed in the box 10. The battery cell 20 may be disposed in the accommodation cavity 13. The battery cell 20 is provided with a pressure relief mechanism (not shown in the drawing).

"The battery cell 20 may be disposed in the accommodation cavity 13" means that the battery cell 20 may be laid flat in the box 10, or the battery cell 20 may be arranged in other forms. The arrangement form is not particularly limited herein.

In a case that the battery cell 20 is laid flat, the height of the pressure relief mechanism on the battery cell 20 is relatively low. It is hereby noted that the battery cell 20 may be relieved of pressure at the pressure relief mechanism. The pressure relief mechanism may be an explosion-proof valve, or an explosion-proof nick, or other structures that implement pressure relief of the battery cell 20.

For example, the pressure relief mechanism is an explosion-proof valve. When the temperature of the battery cell 20 is excessively high or the pressure inside the battery cell 20 is relatively high, the battery cell 20 may leak the electrolyte solution at the pressure relief mechanism. In this case, when the battery cell 20 is being relieved of pressure, the electrolyte solution inside the battery cell may flow into the accommodation cavity 13.

Further, a support beam 30 is disposed in the accommodation cavity 13. That is, the support beam 30 is connected to the box 10, and the support beam 30 is detachably mounted in the accommodation cavity 13. The position of the support beam 30 in the accommodation cavity 13 may be set flexibly based on the actual needs. The connection method between the support beam 30 and the box 10 includes, but is not limited to, bolt connection, snap connection, plug-in connection, magnetic attraction fitting, or the like. Definitely, in some other examples, the support beam 30 may be formed in one piece with the box 10, without being limited herein.

Referring to FIG. 4 to FIG. 6, the support beam 30 is provided with a liquid discharge cavity 31 and at least one liquid inlet 32. The liquid inlet 32 communicates to the liquid discharge cavity 31. In this way, the liquid in the battery cell 20, which is discharged into the accommodation cavity 13 through the pressure relief mechanism, is enabled to be discharged into the liquid discharge cavity 31 from the liquid inlet 32. Therefore, the liquid discharged by the battery cell 20 into the accommodation cavity 13 can be discharged in time, thereby avoiding insulation failure of the battery 100 caused by accumulation of the liquid in the accommodation cavity 13.

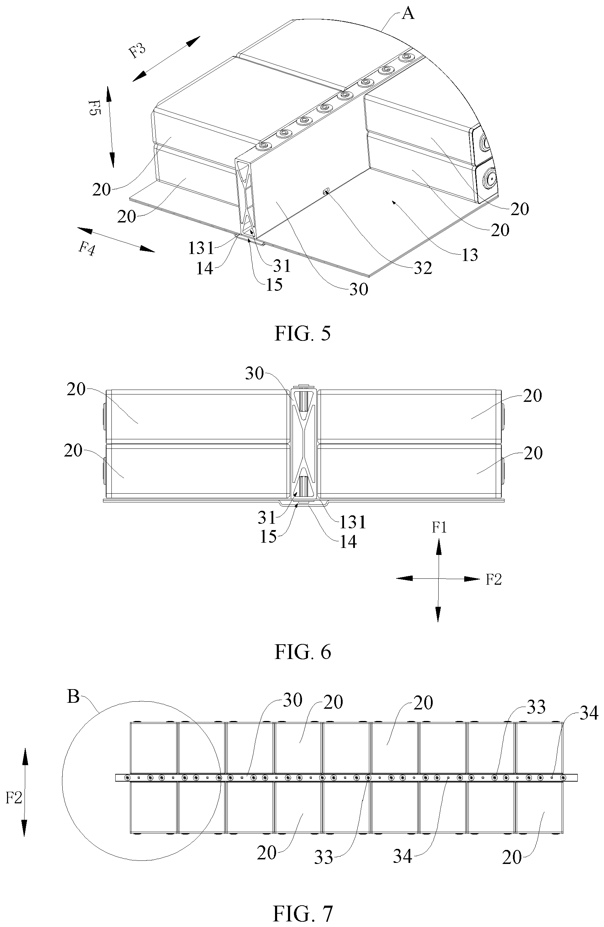

Referring to FIG. 5, the liquid discharge cavity 31 is formed inside the support beam 30. The liquid inlet 32 communicates the liquid discharge cavity 31 and the accommodation cavity 13. In this way, the liquid in the battery cell 20 discharged through the pressure relief mechanism enters the accommodation cavity 13 first. The liquid inlet 32 communicates the liquid discharge cavity 31 and the accommodation cavity 13, so that the liquid entering the accommodation cavity 13 can enter the liquid discharge cavity 31 through the liquid inlet 32, thereby implementing the discharge of the liquid in the accommodation cavity 13.

It is worth noting that the electrolyte solution in the above description is merely used for illustration. For example, when no pressure relief occurs in the battery cell 20, the liquid inlet 32 may discharge a cooling liquid or a water-based coolant in the battery 100 instead.

In the technical solution according to this embodiment of this application, a support beam 30 is disposed in the accommodation cavity 13, and a liquid discharge cavity 31 and a liquid inlet 32 are disposed on the support beam 30. With such a design, the liquid discharged from the pressure relief mechanism of the battery cell 20 into the accommodation cavity 13 is enabled to enter the liquid discharge cavity 31 through the liquid inlet 32. In this way, the liquid discharged by the battery cell 20 into the accommodation cavity 13 can be discharged in time, thereby avoiding insulation failure of the battery 100 caused by accumulation of the liquid in the accommodation cavity 13.

According to some embodiments of this application, optionally, referring to FIG. 4 and FIG. 5, the liquid inlet 32 is lower than the pressure relief mechanism along a height direction of the support beam 30.

Referring to FIG. 4, the "height direction of the support beam 30" means a direction perpendicular to the upper side face of the inner bottom wall 131. In other words, in the direction perpendicular to the upper side face of the inner bottom wall 131, the distance between the liquid inlet 32 and the upper side face of the inner bottom wall 131 is less than the distance between the pressure relief mechanism and the upper side face of the inner bottom wall 131.

In this way, by making the height of the liquid inlet 32 lower than the height of the pressure relief mechanism, the liquid can be made to enter the liquid discharge cavity 31 through the liquid inlet 32 when the height of the liquid in the accommodation cavity 13 does not reach the pressure relief mechanism, thereby improving the liquid discharge efficiency, avoiding electrical connection and conduction between the battery cells 20 caused by an excessively high liquid level accumulated in the accommodation cavity 13, and in turn, more effectively avoiding insulation failure of the battery 100.

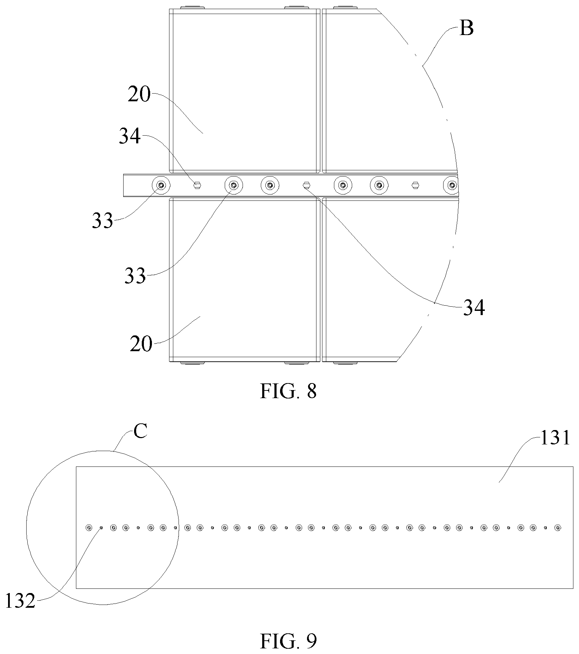

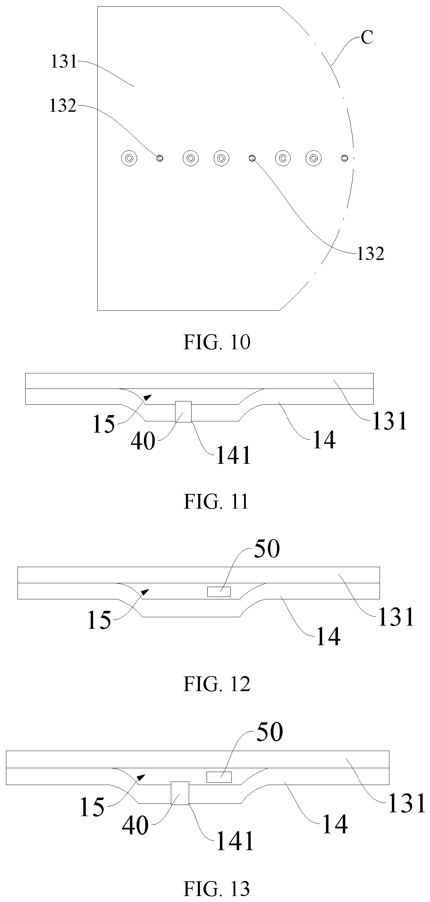

According to some embodiments of this application, optionally, referring to FIG. 7 and FIG. 8, the liquid discharge cavity 31 is provided with a first liquid discharge port 34. Referring to FIG. 9 and FIG. 10, an inner bottom wall 131 of the accommodation cavity 13 is provided with a second liquid discharge port 132. The second liquid discharge port 132 communicates to the first liquid discharge port 34.

With the liquid discharge cavity 31 provided with a first liquid discharge port 34, it is convenient for the liquid in the liquid discharge cavity 31 to flow out of the liquid discharge cavity 31 through the first liquid discharge port 34. With the second liquid discharge port 132 communicating to the first liquid discharge port 34, it is convenient for the liquid in the liquid discharge cavity 31 to flow out of the box 10 through the second liquid discharge port 132.

Referring to FIG. 8, the first liquid discharge port 34 may be disposed on a bottom wall of the support beam 30. Referring to FIG. 10, the second liquid discharge port 132 may be disposed on the inner bottom wall 131. In this way, by disposing the first liquid discharge port 34 and the second liquid discharge port 132 that communicate with each other, the liquid entering the liquid discharge cavity 31 can be discharged through the first liquid discharge port 34 and the second liquid discharge port 132 sequentially, thereby facilitating the discharge of the liquid in the liquid discharge cavity 31, and preventing the liquid from accumulating in the liquid discharge cavity 31 and from leaking back into the accommodation cavity 13.

According to some embodiments of this application, optionally, along a height direction of the support beam 30, the first liquid discharge port 34 and the second liquid discharge port 132 face each other directly.

When the first liquid discharge port 34 and the second liquid discharge port 132 are distributed toward each other directly along the height direction of the support beam 30, it is hereby noted that, referring to FIG. 6, the support beam 30 is located above the inner bottom wall 131, that is, the first liquid discharge port 34 is located above the second liquid discharge port 132.

Therefore, when the liquid in the liquid discharge cavity 31 flows into the liquid collection cavity 15, the liquid in the liquid discharge cavity 31 can flow into the liquid collection cavity 15 through the first liquid discharge port 34 and the second liquid discharge port 132 sequentially. In this case, the flow direction of the liquid is consistent with the gravity direction of the liquid, thereby facilitating the liquid in the liquid discharge cavity 31 to flow into the liquid collection cavity 15 more quickly.

According to some embodiments of this application, optionally, referring to FIG. 3 to FIG. 6, the box 10 further includes a second bottom wall 14. The second bottom wall 14 is located below the inner bottom wall 131. Referring to FIG. 4 and FIG. 6, a liquid collection cavity 15 is defined between the second bottom wall 14 and the inner bottom wall 131. The second liquid discharge port 132 communicates to the liquid collection cavity 15.

The second bottom wall 14 is positioned below the inner bottom wall 131, and at least a part of the second bottom wall 14 is spaced apart from the lower side face of the inner bottom wall 131 to define a liquid collection cavity 15. The liquid collection cavity 15 communicates to the second liquid discharge port 132, that is, the liquid collection cavity 15 communicates to the liquid discharge cavity 31 through the second liquid discharge port 132 and the first liquid discharge port 34.

Furthermore, the liquid in the liquid discharge cavity 31 may flow into the liquid collection cavity 15 through the first liquid discharge port 34 and the second liquid discharge port 132 sequentially, thereby making it convenient to temporarily store or collect the liquid in the liquid discharge cavity 31 by using the liquid collection cavity 15, so as to alleviate the liquid pressure in the liquid discharge cavity 31, reduce the liquid height in the liquid discharge cavity 31, and prevent the liquid in the liquid discharge cavity 31 from accumulating and leaking back into the box 10.

The liquid collection cavity 15 is located below the liquid discharge cavity 31, so that the flow direction of the liquid is consistent with the gravity direction of the liquid when the liquid in the liquid discharge cavity 31 flows into the liquid collection cavity 15, thereby facilitating the liquid in the liquid discharge cavity 31 to flow into the liquid collection cavity 15 more quickly.

In this way, by positioning the second bottom wall 14 below the inner bottom wall 131, a liquid collection cavity 15 is defined between the second bottom wall 14 and the inner bottom wall 131, and the second liquid discharge port 132 communicates to the liquid collection cavity 15. In this way, the liquid discharged from the second liquid discharge port 132 can flow into the liquid collection cavity 15, so that the liquid collection cavity 15 can temporarily store and collect the liquid discharged from the second liquid discharge port 132, thereby making it convenient to collect the liquid, alleviating the liquid pressure in the liquid discharge cavity 31, reducing the liquid height in the liquid discharge cavity 31, and preventing the liquid in the liquid discharge cavity 31 from accumulating and leaking back into the box 10.

According to some embodiments of this application, optionally, the liquid collection cavity 15 is provided with a third liquid discharge port 141. The third liquid discharge port 141 is configured to discharge the liquid.

The liquid in the liquid collection cavity 15 may be discharged through the third liquid discharge port 141. It is worth noting that, referring to FIG. 11 and FIG. 13, the third liquid discharge port 141 may be disposed on the second bottom wall 14, or in another position, without being limited herein.

In this way, it is convenient to discharge the liquid in the liquid collection cavity 15 through the third liquid discharge port 141.

According to some embodiments of this application, optionally, referring to FIG. 11 and FIG. 13, the battery 100 further includes a blocking piece 40. The blocking piece 40 is movably and/or detachably disposed on the second bottom wall 14 to open or close the third liquid discharge port 141.

"The blocking piece 40 is movably and/or detachably disposed on the second bottom wall 14" includes the following options: the blocking piece 40 is movably disposed on the second bottom wall 14, or the blocking piece 40 is detachably disposed on the second bottom wall 14, or the blocking piece 40 is movably and detachably disposed on the second bottom wall 14.

For example, when the blocking piece 40 is movably disposed on the second bottom wall 14, the blocking piece 40 is connected to the second bottom wall 14, and the blocking piece 40 is movable relative to the second bottom wall 14. For example, the blocking piece 40 is rotatably connected or slidably connected to the second bottom wall 14 at the third liquid discharge port 141, where the connection methods include, but are not limited to, rotatable connection, slidable connection, or rolling connection.

Such a design makes it convenient to selectively open or close the third liquid discharge port 141 through the movement of the blocking piece 40, so as to reduce the difficulty of discharging liquid from the liquid collection cavity 15.

Alternatively, when the blocking piece 40 is detachably disposed on the second bottom wall 14, the connection method between the blocking piece 40 and the second bottom wall 14 includes, but is not limited to, bolt connection, snap connection, plug-in connection, magnetic attraction fitting, or the like. Such a design makes it convenient to remove the blocking piece 40 when the third liquid discharge port 141 needs to be opened, enables the liquid collection cavity 15 to discharge liquid, and enables the blocking piece 40 to be mounted onto the second bottom wall 14 to block the third liquid discharge port 141 after the liquid is discharged by the liquid collection cavity 15.

Alternatively, when the blocking piece 40 is movably and detachably disposed on the second bottom wall 14, the blocking piece 40 can be removed when the blocking piece 40 moves relative to the second bottom wall 14. Such a design makes it more flexible to open the third liquid discharge port 141, and makes it convenient to open the third liquid discharge port 141 by detaching the blocking piece 40 when the blocking piece 40 is not movable, so as to discharge the liquid in the liquid collection cavity 15.

In this way, with the blocking piece 40 disposed, the third liquid discharge port 141 can be opened or closed selectively. Therefore, when the third liquid discharge port 141 needs to be closed, the third liquid discharge port 141 can be closed through the blocking piece 40, so as to ensure the airtightness of the liquid collection cavity 15 and avoid leakage of the liquid in the liquid collection cavity 15. When the third liquid discharge port 141 needs to be opened, the third liquid discharge port 141 can be opened through the blocking piece 40, so as to discharge the liquid in the liquid collection cavity 15.

According to some embodiments of this application, optionally, the blocking piece 40 is configured to open the third liquid discharge port 141 when the mass of the liquid in the liquid collection cavity 15 reaches a preset threshold, and close the third liquid discharge port 141 when the mass of the liquid is lower than the preset threshold.

The "preset threshold" means a maximum mass of the liquid that the liquid collection cavity 15 can accommodate. The preset threshold may be a specific value or a value range, and is specifically set depending on factors such as the volume of the liquid collection cavity 15.

For example, the blocking piece 40 may be a switch structure such as a gravity sensing switch or a gravity valve, where the status of the switch structure is changeable with the change of gravity. The preset threshold is a value range. The maximum value of the range is the maximum mass of the liquid that the liquid collection cavity 15 can accommodate, and the minimum value of the range is the mass of the liquid in the liquid collection cavity 15 when the mass of the liquid is zero or approximately zero.

When the blocking piece 40 is a gravity valve, during the operation of the gravity valve, when the liquid in the liquid discharge cavity 31 gradually flows into the liquid collection cavity 15, the mass of the liquid in the liquid collection cavity 15 gradually increases. When the mass of the liquid in the liquid collection cavity 15 reaches the preset upper-limit threshold, the gravity valve automatically opens the third liquid discharge port 141 to discharge the liquid in the liquid collection cavity 15. When the liquid in the liquid collection cavity 15 is completely discharged or reaches the preset lower-limit threshold, the gravity valve automatically closes, that is, the gravity valve automatically closes the third liquid discharge port 141.

It is hereby noted that the gravity valve is merely used as an example rather than any limitation on the blocking piece. The blocking piece may be any structure that can use the mass of the liquid in the liquid collection cavity 15 as a condition for determining whether the blocking piece 40 is to open or close the third liquid discharge port 141.

In this way, the mass of the liquid in the liquid collection cavity 15 is used as a condition for determining whether the blocking piece 40 is to open or close the third liquid discharge port 141. To be specific, when the liquid collection cavity 15 collects the liquid and the mass of the liquid in the liquid collection cavity 15 reaches the preset threshold, the blocking piece 40 automatically opens the third liquid discharge port 141, so as to discharge the liquid out of the battery 100 pack. After the liquid is discharged, when the mass of the liquid in the liquid collection cavity 15 drops below the preset threshold, the blocking piece 40 automatically closes the third liquid discharge port 141, thereby not impairing the airtightness of the liquid collection cavity 15.

According to some embodiments of this application, optionally, the blocking piece 40 includes a movable piece and an elastic reset piece. The elastic reset piece is connected to the movable piece and the second bottom wall 14 respectively so that the movable piece is able to switch between a state of opening the third liquid discharge port 141 and a state of closing the third liquid discharge port 141.

"The elastic reset piece is connected to the movable piece and the second bottom wall 14 respectively" means that the movable piece may be connected to the second bottom wall 14 to close the third liquid discharge port 141, or the movable piece may be detached from the second bottom wall 14 to open the third liquid discharge port 141, where the elastic reset piece is connected between the movable piece and the second bottom wall 14 so that the reset elastic piece can drive the movable piece to move.

For example, when the third liquid discharge port 141 needs to be opened, the elastic reset piece can drive the movable piece to be detached from the second bottom wall 14 to open the third liquid discharge port 141, so that the liquid in the liquid collection cavity 15 can be discharged from the third liquid discharge port 141; or, when the third liquid discharge port 141 needs to be closed, the elastic reset piece can drive the movable piece to contact the second bottom wall 14 to close the third liquid discharge port 141, thereby preventing the liquid in the liquid collection cavity 15 from flowing out of the third liquid discharge port 141, and in turn, enhancing the hermeticity of the third liquid discharge port 141.

By configuring the blocking piece 40 as an elastic reset piece and a movable piece, when it is necessary to discharge the liquid in the liquid collection cavity 15, the elastic reset piece drives the movable piece to move to open the third liquid discharge port 141. When it is not necessary to discharge the liquid in the liquid collection cavity 15, the movable piece can be automatically reset under the elastic force of the elastic reset piece to close the third liquid discharge port 141, thereby not impairing the airtightness of the liquid collection cavity 15.

According to some embodiments of this application, optionally, a part of the blocking piece 40 forms an elastic piece. The elastic piece is configured to close the third liquid discharge port 141 when attached to the second bottom wall 14. The elastic piece is further configured to open the third liquid discharge port 141 when detached from the second bottom wall 14.

"A part of the blocking piece 40 forms an elastic piece" means that at least a part of the blocking piece 40 in contact with the second bottom wall 14 forms an elastic piece or at least a part of the blocking piece 40 in contact with the second bottom wall 14 is made of an elastic material. The elastic piece is of high elastic deformation ability. Therefore, when the blocking piece 40 blocks the third liquid discharge port 141, the elastic piece is attached to the second bottom wall 14 to close the third liquid discharge port 141. In this case, the elastic piece can be squeezed and deformed to better block the third liquid discharge port 141 and enhance the hermeticity of the third liquid discharge port 141.

Alternatively, when the blocking piece 40 opens the third liquid discharge port 141, the elastic piece is deformed and detached from the second bottom wall 14 to open the third liquid discharge port 141. In this case, the liquid in the liquid collection cavity 15 can flow out along the third liquid discharge port 141. When the liquid in the liquid collection cavity 15 is completely discharged or the third liquid discharge port 141 needs to be closed, the elastic piece is reset automatically under the elastic force of the elastic piece and attached to the second bottom wall 14 to close the third liquid discharge port 141, thereby reducing the difficulty of closing the third liquid discharge port 141.

By forming a part of the blocking piece 40 as an elastic piece, when it is necessary to discharge the liquid in the liquid collection cavity 15, the elastic piece can be detached from the second bottom wall 14 to open the third liquid discharge port 141. When it is not necessary to discharge the liquid in the liquid collection cavity 15, the elastic piece can be automatically reset under the elastic force of the elastic piece and attached to the second bottom wall 14 to close the third liquid discharge port 141, thereby not impairing the airtightness of the liquid collection cavity 15.

According to some embodiments of this application, optionally, referring to FIG. 12 and FIG. 13, a liquid absorption piece 50 is disposed in the liquid collection cavity 15.

The "liquid absorption piece 50" means a structure that possesses a specified liquid-absorbing capacity. It is worth noting that the "absorption capacity" includes, but is not limited to, the material properties of the liquid absorption piece 50 itself, or the ability that the liquid absorption piece 50 can exhibit, that is, absorption based on physical principles.

For example, the "liquid-absorbing capacity" may be a property of the liquid absorption piece 50 itself. For example, the liquid absorption piece 50 may a unitary structure or a composite structure formed of a sponge, a water-absorbing resin, or another material with a liquid-absorbing capacity. In this way, the liquid-absorbing capacity of the liquid absorption piece 50 to absorb the liquid in the liquid discharge cavity 31 can be implemented by using the liquid absorption property of the liquid absorption piece 50 itself.

Alternatively, the liquid absorption piece 50 may be a physical structure with a water pumping capacity, such as a water pump, so that the liquid in the liquid discharge cavity 31 can be sucked into the liquid collection cavity 15 by using the suction force of the water pump.

Alternatively, the liquid absorption piece 50 may be a combination of a structure made of a sponge or another material with a liquid-absorbing capacity and a physical structure such as a water pump. The form of the liquid absorption piece is not limited herein.

Therefore, because the liquid absorption piece 50 possesses a specified adsorption capacity, the liquid in the liquid discharge cavity 31 can enter the liquid collection cavity 15 more quickly under the absorption action of the liquid absorption piece 50, thereby making it convenient to discharge the liquid in the liquid discharge cavity 31 in time, and improving the discharge efficiency of the liquid in the liquid discharge cavity 31.

According to some embodiments of this application, optionally, the liquid absorption piece 50 is replaceably disposed in the liquid collection cavity 15.

"The liquid absorption piece 50 being replaceable" means that the liquid absorption piece 50 is separately mounted in the liquid collection cavity 15. In other words, the liquid absorption piece 50 is a separate structure. Such a design facilitates regular replacement or maintenance or clean-up of the liquid absorption piece 50. By replacing the liquid absorption piece 50, it is ensured that the liquid absorption piece 50 in the liquid collection cavity 15 achieves the best adsorption effect.

According to some embodiments of this application, optionally, as shown in FIG. 4, in a thickness direction of the support beam 30, the liquid inlet 32 is located on a sidewall of the liquid discharge cavity 31. The liquid inlets 32 are arranged at intervals on the inner bottom wall 131 of the accommodation cavity 13.

"The sidewall of the liquid discharge cavity 31" means a sidewall of the support beam in the thickness direction of the support beam 30. At least one liquid inlet 32 is disposed on at least one sidewall of the support beam in the thickness direction of the support beam 30. The liquid inlet 32 is spaced apart from the inner bottom wall 131 of the accommodation cavity 13, so as to reduce the processing difficulty of the liquid inlet 32.

Such a design enables the liquid inlet 32 to be located on the sidewall of the support beam in the thickness direction of the support beam 30. The liquid inlet 32 is spaced apart from the inner bottom wall 131 of the accommodation cavity 13, so as to reduce the difficulty of processing the liquid inlet 32 and improve production efficiency.

According to some embodiments of this application, optionally, a thermal management channel (not shown in the drawing) is disposed in the support beam 30. The thermal management channel is disposed independently from the liquid discharge cavity 31. A heat exchange fluid is disposed in the thermal management channel. At least a part of the battery cell 20 is thermally connected to the support beam 30.

The thermal management channel and the liquid discharge cavity 31 are arranged independently from each other to avoid direct mutual interference, thereby ensuring stable operation of the thermal management system. The "thermal management channel" means a part of the flow channel of the thermal management system of the battery 100. A heat exchange fluid may flow through the thermal management channel. The heat exchange fluid is a heat exchange medium, such as water-based coolant or a cooling liquid.

When the heat exchange fluid flows in the thermal management channel, the heat exchange fluid exchanges heat with the support beam 30. At this time, at least a part of the battery cell 20 thermally connected to the support beam 30 exchanges heat with the support beam 30, thereby implementing heating, cooling, or temperature-keeping of the battery cell 20.

In this way, by disposing a thermal management channel in the support beam 30, it is convenient for the heat exchange fluid to flow along the thermal management channel. At least a part of the battery cell 20 is thermally connected to the support beam 30, so that the battery cell 20 can exchange heat with the support beam 30, thereby making it convenient to control the temperature of the battery 100 through the thermal management channel, and ensuring that the battery 100 can operate at appropriate temperature.

According to some embodiments of this application, optionally, referring to FIG. 3 and FIG. 4, the battery cells 20 thermally connected to the support beam are distributed on at least one side of the support beam 30 along the thickness direction (the direction shown in FIG. 3 and FIG. 4).

For example, the battery cells 20 thermally connected to the support beam are distributed on one side of the support beam 30 along the thickness direction, or the battery cells 20 thermally connected to the support beam are distributed on the other side of the support beam 30 along the thickness direction, or, referring to FIG. 3 and FIG. 4, the battery cells 20 thermally connected to the support beam are distributed on both sides of the support beam 30 along the thickness direction.

In this way, it is convenient to thermally connect a plurality of battery cells 20 to the support beam 30 simultaneously, thereby increasing the heat exchange area between the battery cells 20 and the support beam 30, and improving the heat exchange efficiency between the support beam 30 and the battery cells 20.

According to some embodiments of this application, optionally, referring to FIG. 3 to FIG. 6, a plurality of rows of stacked battery cells 20 are disposed on the same side of the support beam 30.

"Stacking" means that at least one battery cell 20 is located on another battery cell 20, so as to make the arrangement of the battery cells 20 more compact, save the mounting space, make it convenient to thermally connect more battery cells 20 to the same side of the support beam 30, and improve the heat exchange efficiency between the support beam 30 and the battery cells 20.

According to some embodiments of this application, optionally, the pressure relief mechanism is disposed on a sidewall of the battery cell 20, the sidewall being oriented toward the support beam 30.

By disposing the pressure relief mechanism on one side of the battery cell 20, with the side oriented toward the support beam 30, the liquid can be brought out more easily during pressure relief of the battery cell 20, the battery cell 20 can be relieved of pressure more quickly.

In this way, by disposing the pressure relief mechanism on the sidewall of the battery cell 20, with the sidewall oriented toward the support beam 30, the pressure relief mechanism is closer to the liquid inlet 32. Therefore, the liquid can be brought out more easily during pressure relief of the battery cell 20, the battery cell 20 can be relieved of pressure more quickly, and the liquid released from the battery cell 20 can more easily enter the liquid discharge cavity 31 through the liquid inlet 32.

According to some embodiments of this application, optionally, the battery cell 20 includes a dimension H1 along a first direction, a dimension H2 along a second direction, and a dimension H3 along a third direction. The battery cell 20 satisfies: H1 ≥ H2 > H3. The first direction, the second direction, and the third direction are perpendicular to each other. The third direction is parallel to a height direction of the support beam 30.

"The first direction, the second direction, and the third direction" may mean the length, the width, and the height direction of the battery cell 20, respectively. To be specific, "the dimension H1 of the battery cell 20 along the first direction" may mean the length H1 of the battery cell 20, "the dimension H2 of the battery cell 20 along the second direction" may mean the width H2 of the battery cell 20, and "the dimension H3 of the battery cell 20 along the third direction" may mean the height H3 of the battery cell 20.

The battery cell 20 satisfies: H1 ≥ H2 > H3, indicating that the height of the battery cell 20 is relatively small. For example, the battery cell 20 may be a plate-shaped battery or a blade battery. In this way, when the battery cells 20 are stacked, more battery cells 20 can be stacked within the height range of the support beam 30, thereby making the arrangement of the battery cells 20 more compact, saving the mounting space, and reducing the height of the pressure relief mechanism of each battery cell 20.

This arrangement allows the battery cells 20 to lie flat in the box 10, makes the arrangement of the battery cells 20 more compact, saves the mounting space, and makes the pressure relief mechanism of the battery cell 20 positioned not in a high position. After the battery cell 20 is relieved of pressure, the liquid can flow into the accommodation cavity 13, thereby reducing the splashing of the liquid during pressure relief of the battery cell 20.

According to some embodiments of this application, optionally, the battery cell 20 includes a center plane perpendicular to the third direction. At least a part of the pressure relief mechanism is located on one side of the center plane, the side being close to an inner bottom wall 131 of the accommodation cavity 13.

The "center plane perpendicular to the third direction" means a plane perpendicular to the height direction of the battery cell 20. The plane passes through the height center of the battery cell 20. At least a part of the pressure relief mechanism is located below the center plane.

Such a design enables at least a part of the pressure relief mechanism in the third direction of the battery cell 20 to be located in a lower region of the battery cell 20. The design can reduce the height of the pressure relief mechanism, thereby preventing the pressure relief mechanism from being excessively high, and in turn, avoiding electrical connection and conduction between the battery cells 20 during pressure relief of the battery cells 20, and more effectively avoiding insulation failure of the battery 100.

According to some embodiments of this application, optionally, the pressure relief mechanism is disposed on a surface of the battery cell 20, the surface being oriented toward an inner bottom wall 131 of the accommodation cavity 13.

The surface of the battery cell 20, the surface being oriented toward the inner bottom wall 131 of the accommodation cavity 13, is usually subjected to a high pressure. The pressure relief mechanism is disposed on the surface of the battery cell 20, with the surface oriented toward the inner bottom wall 131 of the accommodation cavity 13, so that the battery cell 20 can be relieved of pressure more quickly.

Such a design enables the liquid in the battery cell 20 to be discharged more quickly during pressure relief of the battery cell 20. The discharged liquid can enter the liquid discharge cavity 31 in time from the liquid inlet 32, thereby preventing the pressure relief mechanism from being excessively high, and in turn, avoiding electrical connection and conduction between the battery cells 20 during pressure relief of the battery cells 20, and more effectively avoiding insulation failure of the battery 100.

According to some embodiments of this application, this application further provides an electrical device. The electrical device includes the battery 100 disclosed in any one of the foregoing technical solutions, and the battery 100 is configured to provide electrical energy for the electrical device.

The electrical device may be any device or system in which the battery 100 is applied.

According to some embodiments of this application, this application provides a battery 100. The battery 100 includes a box 10, a battery cell 20, and a support beam 30. A plurality of battery cells 20 are disposed. The plurality of battery cells 20 are divided into two groups. The two groups of battery cells 20 are located on two sides of the support beam 30 in the thickness direction. The battery cells 20 are laid flat. The height of the pressure relief mechanism is relatively low. The support beam 30 is mounted on an inner bottom wall 131 by a connecting bolt 33. A liquid inlet 32 is disposed on at least one side of the support beam 30 in the thickness direction of the support beam. The height of the liquid inlet 32 is lower than the height of the pressure relief mechanism. The liquid inlet 32 communicates to a liquid discharge cavity 31 inside the support beam 30.

Further, a second bottom wall 14 is disposed on one side of the inner bottom wall 131, the side being oriented away from the support beam 30. A liquid collection cavity 15 is defined between the second bottom wall 14 and the inner bottom wall 131. The liquid discharge cavity 31 is provided with a first liquid discharge port 34, the inner bottom wall 131 is provided with a second liquid discharge port 132, and the second bottom wall 14 is provided with a third liquid discharge port 141.

When the electrolyte solution in the battery cell 20 is released by the pressure relief mechanism, the liquid discharged from the pressure relief mechanism of the battery cell 20 into the accommodation cavity 13 is enabled to enter the liquid discharge cavity 31 through the liquid inlet 32. In this way, the liquid discharged by the battery cell 20 into the accommodation cavity 13 can be discharged in time, thereby avoiding insulation failure of the battery 100 caused by accumulation of the liquid in the accommodation cavity 13.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery (100), comprising:
a box (10), wherein an accommodation cavity (13) is disposed in the box (10);
a battery cell (20), disposed in the accommodation cavity (13), wherein the battery cell (20) is provided with a pressure relief mechanism; and
a support beam (30), wherein the support beam (30) is disposed in the accommodation cavity (13), the support beam (30) is provided with a liquid discharge cavity (31) and a liquid inlet (32), and the liquid inlet (32) communicates to the liquid discharge cavity (31) so that a liquid in the battery cell (20) discharged into the accommodation cavity (13) through the pressure relief mechanism is able to be discharged from the liquid inlet (32) into the liquid discharge cavity (31).

2. The battery (100) according to claim 1, wherein the liquid inlet (32) is lower than the pressure relief mechanism along a height direction of the support beam (30).

3. The battery (100) according to any one of claims 1 to 2, wherein the liquid discharge cavity (31) is provided with a first liquid discharge port (34), an inner bottom wall (131) of the accommodation cavity (13) is provided with a second liquid discharge port (132), and the second liquid discharge port (132) communicates to the first liquid discharge port (34).

4. The battery (100) according to claim 3, wherein, along a height direction of the support beam (30), the first liquid discharge port (34) and the second liquid discharge port (132) face each other directly.

5. The battery (100) according to any one of claims 3 to 4, wherein the box (10) further comprises a second bottom wall (14), the second bottom wall (14) is located below the inner bottom wall (131), a liquid collection cavity (15) is defined between the second bottom wall (14) and the inner bottom wall (131), and the second liquid discharge port (132) communicates to the liquid collection cavity (15).

6. The battery (100) according to claim 5, wherein the liquid collection cavity (15) is provided with a third liquid discharge port (141), and the third liquid discharge port (141) is configured to discharge a liquid.

7. The battery (100) according to claim 6, further comprising a blocking piece (40), wherein the blocking piece (40) is movably and/or detachably disposed on the second bottom wall (14) to open or close the third liquid discharge port (141).

8. The battery (100) according to claim 7, wherein the blocking piece (40) is configured to open the third liquid discharge port (141) when a mass of the liquid in the liquid collection cavity (15) reaches a preset threshold, and close the third liquid discharge port (141) when the mass of the liquid is lower than the preset threshold.

9. The battery (100) according to claim 8, wherein the blocking piece (40) comprises a movable piece and an elastic reset piece, and the elastic reset piece is connected to the movable piece and the second bottom wall (14) respectively so that the movable piece is able to switch between a state of opening the third liquid discharge port (141) and a state of closing the third liquid discharge port (141).

10. The battery (100) according to any one of claims 8 to 9, wherein a part of the blocking piece (40) forms an elastic piece, the elastic piece is configured to close the third liquid discharge port (141) when attached to the second bottom wall (14), and the elastic piece is further configured to open the third liquid discharge port (141) when detached from the second bottom wall (14).

11. The battery (100) according to any one of claims 5 to 10, wherein a liquid absorption piece (50) is disposed in the liquid collection cavity (15).

12. The battery (100) according to claim 11, wherein the liquid absorption piece (50) is replaceably disposed in the liquid collection cavity (15).

13. The battery (100) according to any one of claims 1 to 12, wherein, in a thickness direction of the support beam (30), the liquid inlet (32) is located on a sidewall of the liquid discharge cavity (31), and the liquid inlets (32) are arranged at intervals on the inner bottom wall (131) of the accommodation cavity (13).

14. The battery (100) according to any one of claims 1 to 13, wherein a thermal management channel is disposed in the support beam (30), the thermal management channel is disposed independently from the liquid discharge cavity (31), a heat exchange fluid is disposed in the thermal management channel, and at least a part of the battery cell (20) is thermally connected to the support beam (30).

15. The battery (100) according to claim 14, wherein the battery cells (20) thermally connected to the support beam are distributed on at least one side of the support beam (30) along a thickness direction.

16. The battery (100) according to claim 15, wherein a plurality of rows of stacked battery cells (20) are disposed on a same side of the support beam (30).

17. The battery (100) according to any one of claims 14 to 16, wherein the pressure relief mechanism is disposed on a sidewall of the battery cell (20), the sidewall being oriented toward the support beam (30).

18. The battery (100) according to claim 17, wherein the battery cell (20) comprises a dimension H1 along a first direction, a dimension H2 along a second direction, and a dimension H3 along a third direction; the battery cell (20) satisfies: H1 ≥ H2 > H3; and the first direction, the second direction, and the third direction are perpendicular to each other; and
the third direction is parallel to a height direction of the support beam (30).

19. The battery (100) according to claim 18, wherein the battery cell (20) comprises a center plane perpendicular to the third direction, and at least a part of the pressure relief mechanism is located on one side of the center plane, the side being close to an inner bottom wall (131) of the accommodation cavity (13).

20. The battery (100) according to any one of claims 14 to 19, wherein the pressure relief mechanism is disposed on a surface of the battery cell (20), the surface being oriented toward an inner bottom wall (131) of the accommodation cavity (13).

21. An electrical device, comprising the battery (100) according to any one of claims 1 to 20, wherein the battery (100) is configured to provide electrical energy.
